# EUROPÄISCHE PATENTSCHRIFT

(11) **EP 0 753 164 B1**
(45) Veröffentlichungstag und Bekanntmachung des Hinweises auf die Patenterteilung: **17.05.2000**
(21) Anmeldenummer: 95916603.4
(22) Anmeldetag: 29.03.1995
(51) Int. Cl.: G02B 21/22

(54) **STEREOMIKROSCOP**
STEREOMICROSCOPE
STEREOMICROSCOPE

(30) Priorität: 30.03.1994 CH 94994; 14.04.1994 CH 129594; 17.05.1994 CH 152594
(43) Veröffentlichungstag der Anmeldung: 15.01.1997
(60) Teilanmeldung: 99112038.7
(73) Patentinhaber: Leica Mikroskopie Systeme AG, 9435 Heerbrugg (CH)
(72) Erfinder: SPINK, Roger, CH-9436 Balgach (CH); BRAUNECKER, Bernhard, CH-9445 Rebstein (CH); ROGERS, John, Rice, CH-9435 Heerbrugg (CH); ZIMMER, Klaus-Peter, CH-9435 Heerbrugg (CH)
(74) Vertreter: Stamer, Harald
(86) Internationale Anmeldenummer: EP9501186
(87) Internationale Veröffentlichungsnummer: WO9527226

(56) Entgegenhaltungen:
- DE-A- 3 530 928
- DE-U- 9 305 447
- US-A- 3 818 125
- PATENT ABSTRACTS OF JAPAN vol. 14 no. 128 (P-1019) ,9.März 1990 & JP,A,01 319721 (NIKON CORP.) 26.Dezember 1989,

## Beschreibung

Die Erfindung betrifft ein Stereomikroskop, nach dem Oberbegriff des Anspruches 1.

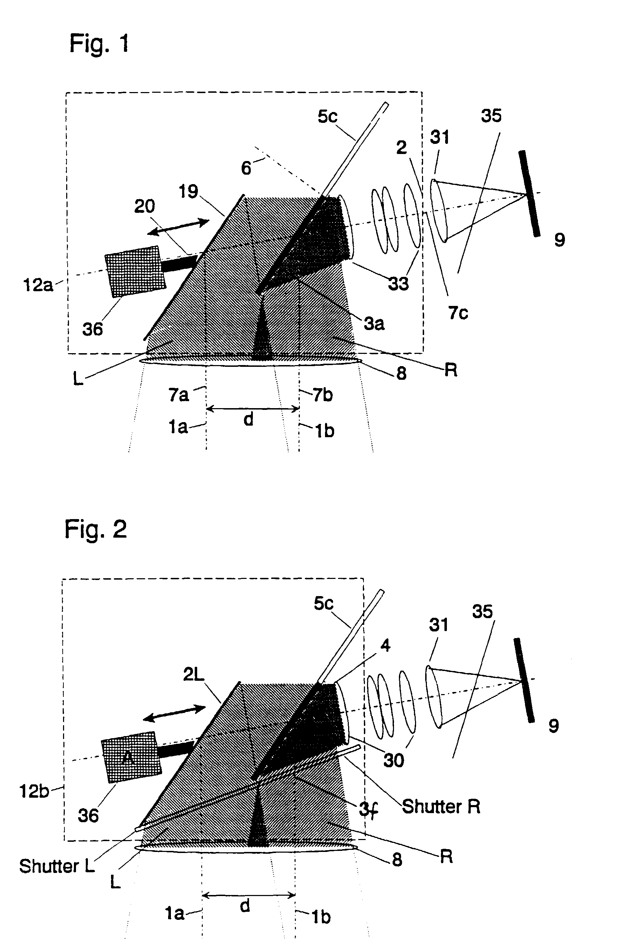

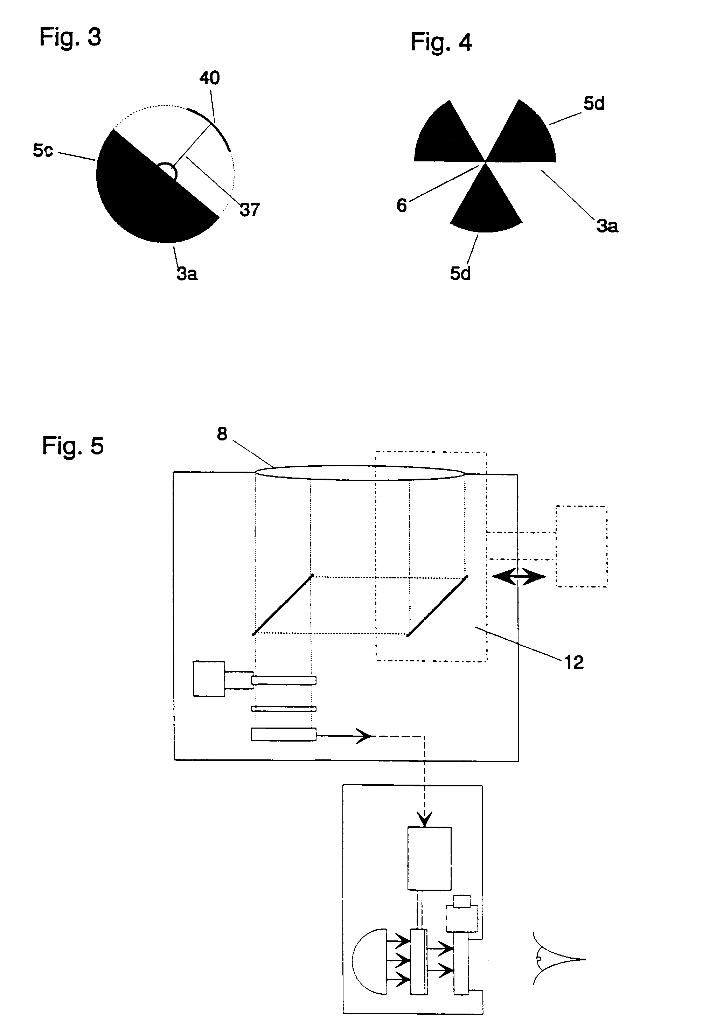

Stereomikroskope mit einer Einstellmöglichkeit der Stereobasis sind in der US-A-3818125 (Butterfield, 1971) beschrieben. Obwohl dort verschiedene Variationen von Möglichkeiten zur Stereobasisvariation beschrieben sind, haben sich solche Einrichtungen in der Praxis nicht durchgesetzt. Und dies, obwohl die bekannten und von Butterfield angegebenen Nachteile bei Stereomikroskopen ohne Stereobasisverstellung nach wie vor vorhanden sind. Insofern wird auf die betreffenden Beschreibungsteile - insbesondere in Spalte 2, Zeile 43 - 62 - bei Butterfield verwiesen. Der Grund für die Nichtanwendung der Lehren von Butterfield liegt offensichtlich in verschiedenen Problemen, die sich aus seinen Lösungsvorschlägen ergeben. So scheidet beispielsweise die Anwendung von Prismen (z.B. Fig.5 - 9 bei Butterfield) aus, weil diese, wie Butterfield selbst zugibt (Spalte 9, Zeile 65 und 66 bei Butterfield), Farbaberrationen mit sich bringen, die die Farbqualität des betrachteten Bildes negativ beeinflussen können. Die von Butterfield vorgeschlagenen Variationen mit verschiebbaren Blenden (10, z.B. Fig.2 und 5) weisen darüber hinaus den Nachteil auf, dass durch eine Verschiebung dieser nicht nur die Stereobasis verstellt sondern ausserdem auch die Bildhelligkeit abgedunkelt bzw. verändert wird, was nachteiligerweise insbesondere bei kleinen Stereobasen zu einer zu geringen Lichtausbeute führen kann.

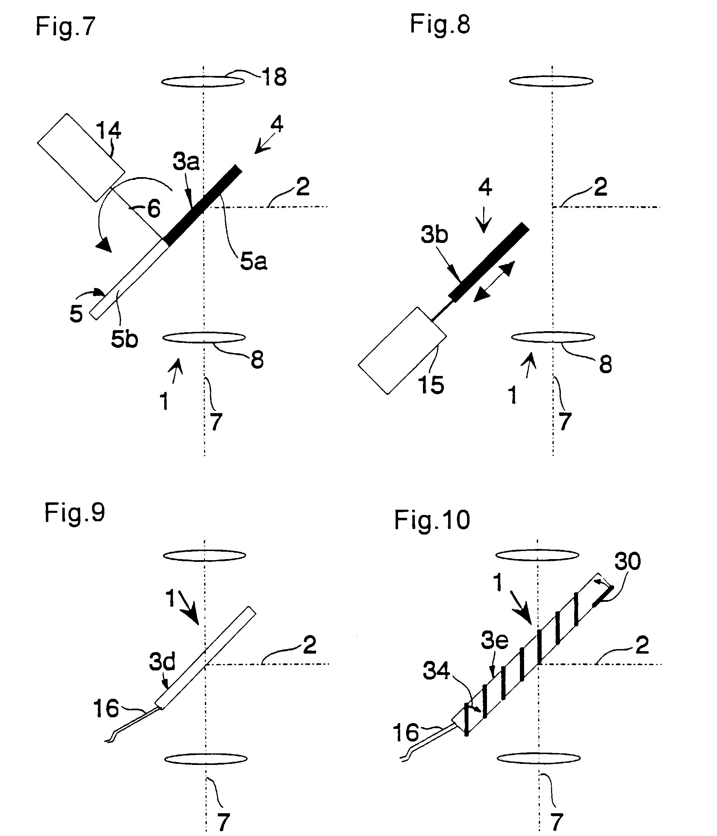

Ähnliche Nachteile treten bei dem Lösungsvorschlag gemäss Fig.10 von Butterfield auf. Durch das Verschwenken der Spiegel (50) wird nämlich nicht nur die Stereobasis verstellt, sondern vielmehr auch die Apertur verändert, was wieder zu entsprechenden Lichtverlusten führen kann.

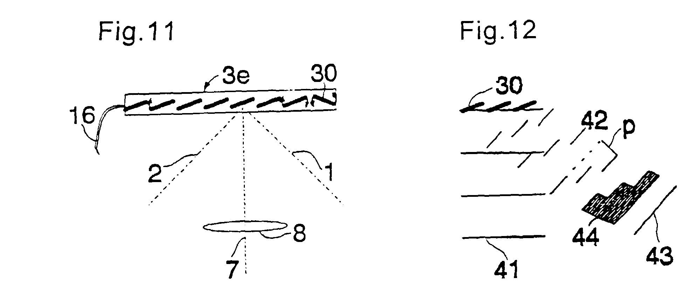

Die von Butterfield vorgeschlagenen Varianten nach Fig.11 und 12 sind wieder insofern aufwendig und nur schwer realisierbar, als dort zwei parallele Linsensysteme (54) erforderlich sind, die eine entsprechende Verteuerung und auch eine entsprechende Baugrössenerhöhung verbunden mit weiteren Lichteinbussen durch eventuell zu geringe Apertur mit sich bringen. Darüber hinaus ist es in der Regel auch schwierig, solche parallelen Linsensysteme so zu justieren, dass sie identische Eigenschaften aufweisen. Sind jedoch die Eigenschaften nicht identisch, kann dies zu Ermüdungen beim Betrachter führen, insbesondere wenn diesem eine Videokamera und ein Monitor vorgeschaltet sind, da er dort nicht, wie bei zwei Okularstrahlengängen die Möglichkeit hat, individuell nachzukorrigieren.

Der Stand der Technik kennt weiters die DE-U-93 05 447. Dort wird ein Stereomikroskop geoffenbart, das einen linken und rechten Stereostrahlengang durch ein einziges Hauptobjektiv lenkt und eine Verstelleinrichtung zur Wahl einer Stereobasis vorsieht, wobei das Hauptobjektiv zwischen einem zu betrachtenden Objekt und der Verstelleinrichtung angeordnet ist. Die beiden dem Beobachter zugewandten Strahlengänge sind jedoch, wie üblich getrennt, so dass im Falle des Anwendens einer Viedoaufzeichnungseinheit pro Strahlengang je ein Aufzeichnungselement vorzusehen wäre.

Die JP-A-88 152 699 offenbart ein Mikroskop mit einem Okularstrahlengang und einem Strahlenteiler, der für das Einspiegeln von Informationen von einem Display in den Okularstrahlengang geeignet ist. Diese JP-A offenbart auch die Verwendung von mechanooptischen Schaltelementen, die alternierend von einem gesperrten in einen transmissiven Zustand überführbar sind. Es wird jedoch keine verstellbare Stereobasis geoffenbart, weshalb die Beobachtung nicht optimiert werden kann. Ausserdem ist die Baugrösse bedingt durch zwei parallele unabhängige Strahlengänge - wie im Stand der Technik vor der Erfindung allgemein üblich - relativ gross.

Es ist daher die Aufgabe der vorliegenden Erfindung, ein System zu entwickeln, das die Lichtintensität im Strahlengang - zumindest über einen gewissen Zeitraum und für jeden Strahlengang getrennt - trotz variierbarer Stereobasis nicht nennenswert reduziert. Weiters sollen - wie an sich bekannt - Aufnahmen mit nur einer einzigen Bildaufnahmevorrichtung z.B. mit einer einzigen Videokamera ermöglicht sein. Bevorzugt soll weiters nur ein Hauptobjektiv vorgesehen sein und die Baugrösse des Stereomikroskopes auf ein Minimum beschränkt werden.

Gelöst wird diese Aufgabe beispielsweise durch die Merkmale des Anspruches 1. Durch die Anordnung der Verstelleinrichtung hinter dem Hauptobjektiv ergibt sich eine integrierte Bauweise mit geringen Lichtverlusten und ohne die oben angeführten Nachteile. Durch die Zusammenführung der beiden Teilstrahlengänge wird gleichzeitig die Aufnahme durch nur ein Aufzeichnungsgerät möglich.

Eine konkrete Anwendung der Erfindung ergibt sich daher z.B. bei Videostereomikroskopen.

Für solche, aber auch für andere Mikroskope wird eine spezielle Weiterbildung der Erfindung vorgeschlagen, die auch unabhängig von der Erfindung anwendbar ist. Zur Erläuterung des Hintergrundes:

Mikroskope weisen häufig Strahlenteiler auf, um den auf das zu vergrössernde Objekt gerichteten Strahlengang zu vervielfältigen.

An geteilten Strahlengängen sind u.a. häufig zusätzliche Betrachterokulare, Fototuben, Kameraanschlüsse oder Displays aller Art vorgesehen, deren Bilder eingeblendet - d.h. dem Bild des betrachteten Objekts überlagert - werden sollen. Dies trifft insbesondere auch auf Stereomikroskope zu, die eine Bildaufnahmevorrichtung zur Erzeugung einer Stereoansicht auf einem - gegebenenfalls vom Mikroskop entfernten - 3D-Display aufweisen.

Für den letzten Anwendungsfall wird fallweise sowohl für den dem linken Auge als auch für den dem rechten Auge zugeordneten Strahlengang je eine solche Bildaufnahmevorrichtung (z.B. je ein CCD) vorgesehen.

Für den Anwendungsfall mit dem eingeblendeten Display wird analog je ein Display für den dem linken als auch dem rechten Auge zugeordneten Strahlengang (z.B. je ein CRT) vorgesehen.

Diese bekannten Stereomikroskope weisen somit den Nachteil auf, dass zwei Vergrösserungseinrichtungen (Zoom, Wechsler) und zwei Bildaufnahmevorrichtungen bzw. zwei Displays, mitsamt entsprechenden Optiken, notwendig sind. Dabei müssen die linken und rechten Bildaufnahmevorrichtungen bzw. Optiken zueinander justiert werden.

In anderen bekannten Stereomikroskopen gibt es auch Lösungen mit nur einer einzigen Bildaufnahmevorrichtung. Dort werden sowohl der linke als auch der rechte Strahlengang bzw. das in ihnen befindliche Strahlenbündel abwechselnd der einzigen Bildaufnahmevorrichtung zugeführt. Durch einen solchen Aufbau wird eine zweite Bildaufnahmevorrichtung eingespart und unter anderem die serielle Aufzeichnung eines Stereobildpaares auf eine Videoaufzeichnungsvorrichtung erleichtert. Der Umschaltvorgang zwischen den beiden Strahlengängen wird dabei mit Strahlenteilern und Shuttern erreicht, die über Polarisationsänderungen mit entsprechend angeordneten Analysatoren das jeweils nicht gewünschte Strahlenbündel abblocken.

Ein solches Stereomikroskop mit geometrischer Überlagerung des rechten und linken Teilbildes ist beispielsweise in der US-A-5007715 beschrieben.

Das in der US-A-5007715 beschriebene System hat den Nachteil, dass sowohl bei der Polarisierung (ca. 50%) als auch bei der Übereinanderlegung (ca. 50%) der beiden polarisierten Strahlenbündel mittels eines Strahlenteilers bis zu 80% der vorhandenen Lichtintensität des jeweiligen Strahlenbündels (100 %) verloren gehen. Als weiterer Nachteil kann sich ein teilweises Überlagern der beiden unterschiedlichen Bildinformationen des rechten bzw. linken Bildstrahlenganges bemerkbar machen, wenn die Abdunkelung durch die Analysatoren nicht hundertprozentig ist, was vor allem auch dann auftreten kann, wenn die Polarisatoren nicht einwandfrei arbeiten. Nachdem aber gerade bei Mikroskopen die Helligkeit am zu betrachtenden Objekt nicht beliebig gesteigert werden kann, ist der permanente Verlust der Lichtintensität nachteilig. Das teilweise Überlagern kann hingegen zu unnötigen Belastungen für die Sehorgane des Betrachters führen.

Ein ähnliches bekanntes System ist in der US-A-5003385 beschrieben, wo ebenso ca. 80% der Lichtintensität des linken und rechten Strahlenganges absorbiert werden, bevor das Licht auf die einzige Kamera trifft.

Ein etwas anderes System, wo die Polarisation des Lichtes unberücksichtigt bleibt, ist in der US-A-5028994 beschrieben. Dort wird das Licht aus zwei ersten Strahlengängen (linker und rechter Strahlengang) zunächst je einem LC-Shutter (twisted nematic type) zugeführt, der den betreffenden Strahlengang öffnen oder schliessen kann. Beide Strahlengänge treffen sich - über Spiegel umgelenkt - an einem Strahlenteiler. Ist der eine Shutter geöffnet, so wird der zweite Shutter geschlossen, weshalb theoretisch an die nach dem Strahlenteiler angeordnete Kamera stets nur Licht aus einem der beiden ersten Strahlengänge kommen kann. An dem Strahlenteiler gehen je ca. 50% der Lichtintensität verloren; ebenso verliert man am Shutter auch im "geöffneten Zustand" je etwa 50%, da der beschriebene Shutteraufbau (vgl. Spalte 2 Zeile 48 bis Spalte 3 Zeile 29) nur Licht mit einer bestimmten Polarisationsrichtung durchlässt. Zudem kann es bei dem beschriebenen Shutter auch zu den oben erwähnten Nachteilen des teilweisen Überlagerns kommen.

Es ist daher die Aufgabe der vorliegenden Weiterbildung, ein System zu entwickeln, das die Lichtintensität im Strahlengang - zumindest über einen gewissen Zeitraum und für jeden Strahlengang getrennt - bei Verwendung von Strahlenteilern höchstens im Ausmass der dort verlorenen Lichtintensität (in der Regel ca. 50%) reduziert. Mit anderen Worten: Es soll ein Gewinn von etwa 50% der Lichtintensität - sowohl beim Fall des Aufnehmens, als auch beim Fall des Einblendens von Bildern - gegenüber herkömmlichen Stereomikroskopen möglich sein, obwohl nur eine einzige Bildaufnahmevorrichtung oder nur ein einziges Display für beide Strahlengänge vorgesehen ist. Weiters soll das Überlagern zwischen dem rechten und dem linken Bildstrahlengang ausgeschlossen sein.

Gelöst wird diese zusätzliche Aufgabe durch die Merkmale der Ansprüche 3 und 9. Dieselben Probleme bzw. dieselben Aufgaben für Mikroskope mit einzuspiegelnden anstelle von aufzunehmenden Bildern werden erstmals auch durch die Merkmale des Anspruches 13 gelöst.

Für die spezielle Weiterverarbeitung von Videobildern, die von einem erfindungsgemässen Video-Stereomikroskop gewonnen wurden, wird auf die PCT-Patentanmeldung WO-A1-95/18512 verwiesen, die ebenso als im Rahmen dieser Offenbarung liegend gilt. Alle erwähnten Anmeldungen zusammen, bzw. die ihnen zugrundeliegenden Erfindungen, ergänzen sich bei entsprechenden Ausführungsbeispielen symbiotisch.

Das geometrische Ineinanderlegen von einem linken und rechten Stereostrahlengang ermöglicht sodann das Aufnehmen der beiden Strahlengänge durch nur eine Videokamera, so dass nebeneinander liegende Bilder zeitlich hintereinander aufgenommen und weiterverarbeitet werden können. Diese Weiterentwicklung der Erfindung ermöglicht somit auch das Wiedergeben von Bildern über einen Monitor, wie beispielsweise in der US-A-5007715 beschrieben. Die dort zur Figur beim Abstrakt geoffenbarten Angaben gelten auch als hierin geoffenbart.

Die erfindungsgemässe Verwendung mechanischer Blenden, die entweder vollständig reflektieren oder Licht vollständig durchlassen, bewirkt wenigstens während der jeweiligen Zeitdauer einer bestimmten Schaltstellung der Blende die Weiterleitung der vollen Lichtintensität des im betreffenden Strahlengang befindlichen Lichtes. Es entfällt daher das Kodierungsverfahren für das Licht, wie z.B. bei Anwendung von Polarisation, wie auch bei Butterfield vorgeschlagen. Hier wird nur ein- oder ausgeblendet. Daraus ergibt sich ein Intensitätsgewinn von bis zu über 200% verglichen zu bekannten Anordnungen mit Teilern und Polarisationsfiltern. Ein ungewolltes Überlagern von zwei Strahlengängen ist - vorteilhaft gegenüber der Polarisationsanwendung - ausgeschlossen. Durch diese Weiterbildung der Erfindung wird ausserdem auch die weitere Aufgabe somit gelöst, trotz geometrischer Strahlenteilung einen nur geringen Lichtintensitätsverlust zu bewirken.

Es ist zwar die Verwendung mechanischer Blenden in optischen Systemen - wenn auch für völlig andere Zwecke-grundsätzlich bekannt, so wird beispielsweise auf eine Nipkow Scheibe verwiesen, wie sie beispielsweise in der US-A-5067805 dargestellt ist, oder auf starre mechanische Strahlenteiler, bei denen z.B. an einer Ringblende ein Teil des Lichtes im Strahlengang durchgelassen und ein anderer Teil zur Strahlenteilung reflektiert wird, jedoch reduzieren diese bekannten mechanischen Strahlenteiler den tatsächlichen Lichtintensitätsverlust nicht, da nach der Teilung in jedem nachfolgenden Strahlengang jeweils nur ein Teil der ursprünglich 100% Lichtintensität weitergeleitet wird. Der andere Teil ist ja durch den Teiler in den zweiten Strahlengang weitergelenkt.

Einzig Anwendungen mit monochromatischem Licht könnten Teilungsverluste an Teilern auf einen Rest reduzieren, was jedoch bei Wunsch auf Anwendung des gesamten Lichtspektrums nicht möglich ist.

Einen Teilaspekt der Erfindung findet man also bei einem Mikroskop, insbesondere einem Stereomikroskop, mit einem ersten Strahlengang und einem Strahlenteiler in diesem Strahlengang, wobei der Strahlenteiler als mechanooptisches oder elektrooptisches Schaltelement ausgebildet ist, das alternierend von einem reflektiven in einen transmissiven oder einen anderen reflektiven Zustand überführbar ist, wobei einer der beiden Zustände den Lichtweg für den ersten Strahlengang und der andere Zustand den Lichtweg für einen zweiten Strahlengang freigibt, während er den Lichtweg für den Betrachtungsstrahlengang sperrt. Ein solches Schaltelement ersetzt somit herkömmliche Strahlenteiler, wodurch der Lichtverlust wesentlich reduziert werden kann.

Im Rahmen der Erfindung liegen verschiedene weitere Ausbildungsarten und Varianten dazu, die in den abhängigen Ansprüchen beschrieben bzw. gekennzeichnet sind.

Bei einer bevorzugten Variante werden die Eintrittsstrahlenbündel des Stereomikroskopes nach dem (einzigen) Hauptobjektiv entweder mittels eines rotierenden Spiegels mit mindestens jeweils einem transmissiven und reflektiven Teilbereich oder mittels eines feststehenden Teilers und einer die Eintrittsstrahlengänge abwechselnd abdeckenden, rotierenden Blende geometrisch übereinander - jedoch zeitlich hintereinander - gelegt. Hierbei ist es günstig, wenn beide Strahlengänge gleiche optische Weglänge bis zur Bildaufnahmevorrichtung aufweisen. Im Sinne der Erfindung ist es dabei nicht wesentlich, in welcher Form die reflektierenden Blenden eingebracht werden. Translatorische Bewegungen sind dabei gleichzusetzen mit rotierenden Bewegungen oder sonstigen Schaltbewegungen. So können beispielsweise durchaus auch fotokameraverschlussähnliche Blenden vorgesehen werden, die jedoch an wenigstens einer Seite entsprechend verspiegelt sind. Eine Variante mit mikromechanischen Lamellenspiegeln ist ebenso denkbar, wobei solche Lamellenspiegel - zur Zeit gibt es diese im wesentlichen nur in Laborversuchen - in der Regel aus Silizium aufgebaut sind und durch elektrostatische Ladungen geschaltet werden.

Wird, wie in einem Ausführungsbeispiel, eine rotierende Glasscheibe benutzt, die an einer Hälfte verspiegelt ist, so ist damit eine praktische, leicht auszuwuchtende Anordnung gegeben, die jedoch einen kleinen Nachteil aufweist: An der nichtverspiegelten Glashälfte kommt es aufgrund des Planplatteneffektes zu einem Bildversatz. Um diesen zu vermeiden, ist bei einer bevorzugten Variante auf das Glas an dieser Stelle verzichtet, so dass dort ein vollständig freier Lichtdurchtritt möglich ist.

Nachdem bei allen eingeschobenen oder eingedrehten Blenden der Effekt der sich bewegenden Blende unter Umständen für Aufzeichnungen an Bildaufnahmevorrichtungen, z.B. CCD's, nachteilig sein kann ist bei einigen Ausführungsformen weiter vorgesehen, dass die Verschiebe- bzw. Verdrehbewegung besonders schnell durchgeführt wird und die Blende in der dann eingenommenen Schaltstellung für eine gewisse Zeit verweilt. Bei rotierenden Blenden eignet sich dafür besonders ein Antrieb mit einem Steppermotor. Eine entsprechende Ergänzung oder Alternative zu dieser Technik ergibt sich durch eine getaktete Belichtungssteuerung einer allfällig zum Einsatz gelangenden Videokamera, bzw. eines zum Einsatz gelangenden Displays.

Gegebenenfalls könnte über eine weitere Spiegelanordnung zusätzliches Licht über die erwähnte verspiegelte Fläche dem Objekt zugeführt werden. Aufwendigere sonstige Beleuchtungseinrichtungen könnten dadurch unter Umständen sogar entfallen.

Eine weitere Variante mit einem 50/50 Pupillenteiler ist insofern vorteilhaft, als nur ein Glasteiler pro Strahlengang erforderlich ist und im Okularstrahlengang in Abhängigkeit von der Teilerwirkung dieses Glasteilers ein Verhältnis von z.B. 25% Display und 50% Objekt oder (am Okular) z.B. 50% Display und 50% Objekt erreicht werden kann. Ersteres z.B. bei einem Glasteiler von ca. 1/1 Teilwirkung, letzteres z.B. mit einem Glasteiler von ca. 2/1 Teilwirkung.

Eine weitere Variante, die die Beleuchtung vollständig in den Aufbau integriert, ergibt sich, wenn das Schaltelement doppelt benutzt wird, indem die spiegelnde Fläche beidseitig genutzt wird. Es liegt im eingeschwenkten Zustand im Schnittpunkt der Achsen der ersten Strahlengänge vorzugsweise in einem Winkel von je 45° zu den erwähnten Achsen. In direkter Verlängerung eines der ersten Strahlengänge ist eine Lichtquelle angeordnet, deren Licht im eingeschwenkten Zustand des Schaltelements in den einen Strahlengang gespiegelt wird, während es im ausgeschwenkten Zustand direkt in den anderen ersten Strahlengang fällt. In dieser Weise ist eine optimale Beleuchtung von einem betrachteten Objekt möglich.

Weiter bevorzugt ist es, die Blende bzw. den Teilerspiegel möglichst nahe ans Hauptobjektiv zu stellen, um eine Vignettierung der wiedergegebenen Bilder zur vermeiden.

Eine Variante mit mehreren kreissegmentartigen Reflektoren reduziert die erforderliche Umdrehungszahl eines rotierenden Spiegels.

Die Verwendung von Planplatten als Stereobasiseinstellung ist baulich einfach. Die Nachteile der Anwendung von Prismen, wie bei Butterfield, entfallen dadurch. Der mechanische Aufbau ist einfach zu realisieren, eine Miniaturisierung und allfällige automatische und/oder Fern- Steuerung einfach. Eine Kopplung mit der Vergrösserungseinstellung des Stereomikroskopes und/oder mit einer Zoomeinstellung daher denkbar einfach. Die Lichtverluste sind gegenüber der Anwendung von Apertur-Blenden wie bei Butterfield minimal.

Anstelle der mechanisch bewegten Blenden könnten auch andersartige Blenden zum Einsatz gelangen, sofern sie nur imstande sind, hundertprozentig zwischen einem durchlassenden und sperrenden Zustand zu wechseln.

Die Erfindung ist insbesondere im Zusammenhang mit einem Stereomikroskop beschrieben. Im weitesten Sinn kann sie jedoch auch sinnvoll mit beliebigen anderen Strahlengängen angewendet werden.

Weitere Details und Ausführungen der Erfindung ergeben sich aus der Zeichnung. Die dort dargestellten Figuren zeigen:
- Fig. 1: das Prinzip eines Aufbaus zur Stereobasiseinstellung mit einem rotierenden Strahlenteiler mit einer Spiegelfläche;
- Fig.2: das Prinzip eines Aufbaus mit einem herkömmlichen optischen nicht verschiebbaren Strahlenteiler mit einem vorgelagerten Wechselshutterelement zur Strahlentrennung;
- Fig.3: das Prinzip eines rotierenden Strahlenteilers mit einer Spiegelfläche;
- Fig.4: eine Variante zur Fig.3;
- Fig.5: das Prinzip eines Aufbaus gemäss der US-A-5007715 mit erfindungsgemässer Verstelleinrichtung und nur einem Hauptobjektiv;
- Fig.6: das Prinzip eines Aufbaus mit einem LCD-Shutterelement und zwei verschiebbaren Spiegeln;
- Fig.7: das Prinzip eines rotierenden Strahlenteilers mit einer Spiegelfläche;
- Fig.8: das Prinzip eines translatorisch verschiebbaren Strahlenteilers mit einer Spiegelfläche;
- Fig. 9: das Prinzip eines elektronisch schaltbaren LCD-Shutter-Elements, das von einem spiegelnden in einen transmissiven Zustand umschaltbar ist;
- Fig.10: das Prinzip einer mikromechanischen Lamellenspiegelkonstruktion als Strahlenteiler mit einer transmissiven und einer reflektiven Stellung;
- Fig.11: das Prinzip mit einer mikromechanischen Lamellenspiegelkonstruktion als Strahlenteiler mit mindestens zwei Reflexionsstellungen;
- Fig.12: die Kompensation von Phasenverschiebungen an Lamellenspiegeln nach Fig.11;

Die Figuren werden zusammenhängend beschrieben. Gleiche Bezugszeichen bedeuten gleiche Bauteile. Gleiche Bezugszeichen mit unterschiedlichen Indizes bedeuten ähnliche bzw. funktionsähnliche Bauteile. Die Erfindung ist auf die dargestellten Ausführungsbeispiele nicht eingeschränkt. Vor allem in Kombination mit den Lehren der oben angeführten Schweizer Patentanmeldungen und der oben angeführten US-Patente lassen sich noch beliebige Varianten darstellen. Sie alle fallen unter den Offenbarungsinhalt dieser Anmeldung.

Figur 1 zeigt als Bauteil 3a einen Bauteil, wie er näher in Fig.7 beschrieben ist.

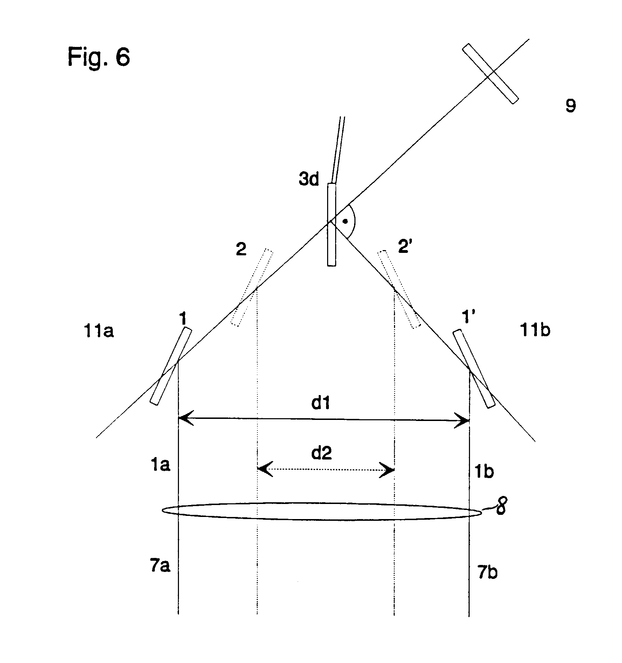

Alternativ könnte stattdessen auch ein Element 3d gemäss Fig.6 bzw. gemäss Fig.9 der letztgenannten Patentanmeldung vorgesehen sein.

Fig.1 zeigt einen Stereomikroskopaufbau mit zwei parallelen ersten Strahlengängen 1a,1b entlang von deren Mittelachsen 7a und 7b, die beide durch ein Hauptobjektiv 8 gelegt sind. Der Strahlengang 1a trifft nach dem Hauptobjektiv auf einen Umlenkspiegel 19, der an einer Schubstange 20 gehalten ist und so eingestellt ist, dass die Mittelachse 7a etwa ins Zentrum einer Bildaufnahmevorrichtung 9 (CCD) gerichtet ist, die hinter einer Vergrösserungsoptik 33 (Zoom) und hinter einer Tubuslinse 31 angeordnet ist. Durch ein Verschieben des Umlenkspiegels 19 - über seinen Stellantrieb 36 - verändert sich die Stereobasis d zwischen den beiden Mittelachsen 7a und 7b, ohne dass die Mittelachse 7a vom Zentrum der Bildaufnahmevorrichtung 9 abweicht.

Der andere erste Strahlengang 1b trifft in der gezeigten Darstellung ebenso auf ein Schaltelement 3a bzw. auf einen Spiegel, der allerdings an einer Halbkreisscheibe 5c ausgebildet ist, die entsprechend der Fig.1 motorisch um die Achse 6 gedreht werden kann. In der gezeigten Stellung wird dadurch der Strahlengang 1a von der Bildaufnahmevorrichtung 9 abgeblockt, während der Strahlengang 1b als Strahlengang 2 auf die Bildaufnahmevorrichtung 9 reflektiert wird. Die Mittelachse 7b von 1b zielt dabei an dieselbe Stelle wie die Mittelachse 7a. Die beiden Strahlengänge 1a und 1b sind somit zeitlich nacheinander geometrisch jedoch übereinander gelagert. Zwischen dem Schaltelement 3a und der Bildaufnahmevorrichtung 9 kann sich noch ein weiterer Spiegel 35 befinden, um die durch die optische Anordnung bedingte Bildspiegelung zu kompensieren. Die Bildaufnahmevorrichtung müsste dann dementsprechend etwa um 90° geschwenkt nach oben versetzt werden.

Der Spiegel an der Halbkreisscheibe 5c ist so gestaltet - gegebenenfalls auch mit gekrümmten Begrenzungslinien versehen - dass der Auslesevorgang an der Bildaufnahmevorrichtung 9 (CCD) wirksam synchronisiert ist.

Durch diesen Aufbau ist der Nachteil bei bestehenden Stereomikroskopen vermieden, der sich durch den üblicherweise festgelegten mechanisch-optischen Abstand der beiden Strahlengänge 1a und 1b ergibt. Dieser fixierte nämlich bisher die Stereobasis und im Zusammenhang mit der Brennweite des Hauptobjektivs 8 den Konvergenzwinkel des stereoskopischen Strahlenganges. Der Konvergenzwinkel ist jedoch wieder ein entscheidender Parameter der Tiefenvergrösserung. Durch diese Variante der Erfindung ist somit vorteilhafterweise eine Einstellung des Konvergenzwinkels unabhängig von der Brennweite des Hauptobjektivs 8 möglich. Daraus ergibt sich eine Steuermöglichkeit der Tiefenvergrösserung. Dies bewirkt eine entscheidende und ergonomische Verbesserung der stereoskopischen Tiefenwahrnehmung, ohne dass es zu Lichtverlusten wie bei Butterfield kommt.

Die Halbkreisscheibe 5c ist, wie symbolisch besser aus Fig.3 ersichtlich, als Schaltelement 3a verspiegelt. Der zweite Teil der Scheibe ist frei von Masse, um Störungen wie Bildversatz o.dgl. zu vermeiden. Am Rand ist lediglich als Massenausgleich ein Ausgleichsgewicht 40 montiert, das zur Drehachse 6 durch einen dünnen Balken 37 gehalten wird.

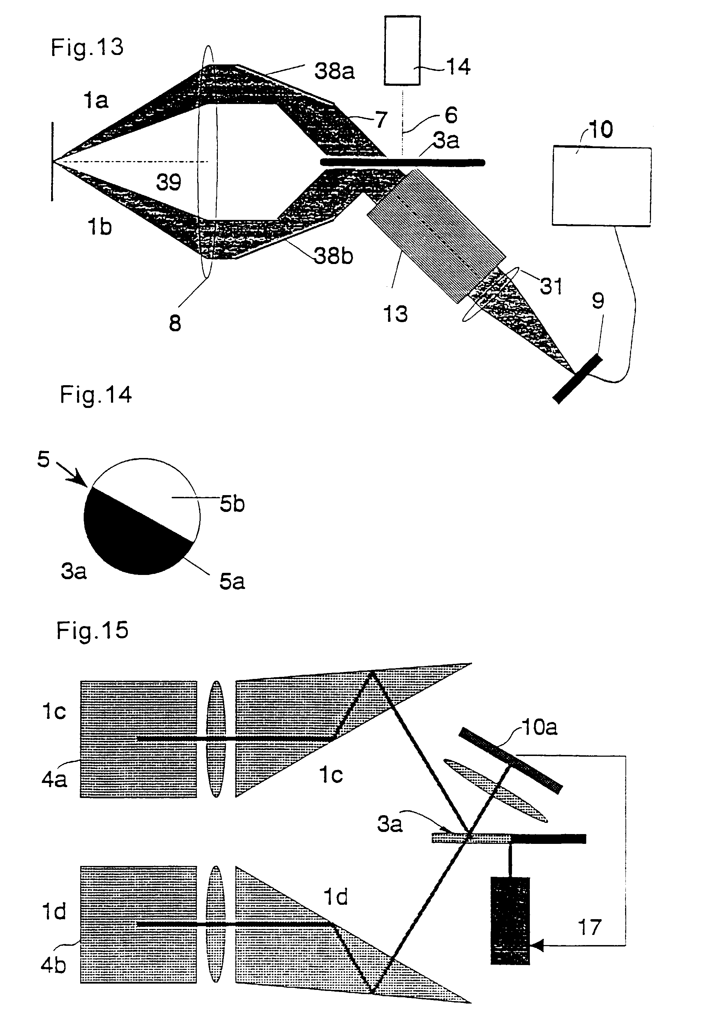

Fig.6 zeigt eine Variante zu Fig.1 mit gleich langen linken und rechten Strahlengängen la und 1b und einem LCD-Shutter-Schaltelement 3d. Dieses könnte, alternativ zur Fig.7, wieder auf einer dünnen Glasscheibe 5 ausgebildet sein - gemäss Fig.13. Der im Bereich der Restfläche 5b entstehende Bildversatz ist dadurch kompensiert, dass in diesem Fall die Spiegelfläche des Schaltelementes 3a nicht an der dem Strahlengang 1b zugewandten Oberfläche der Scheibe 5, sondern beim LCD-Shutterelement etwa in der Mitte der Scheibe an den dort befindlichen LCD-Elementen entsteht. Beide Strahlengänge 1a und 1b erleiden somit einen Bildversatz in die gleiche Richtung.

Das Wesen der Strahlengänge 1a und 1b bei der Anordnung in Fig.6 ist deren gleiche Länge bis zur Bildaufnahmevorrichtung 9. Diese gleiche Länge wird erzielt durch den symmetrischen Aufbau um die Mittelachse des Hauptobjektives 8, der durch zwei Umlenkspiegel 11a und 11b unterstützt ist. Diese könnten auch durch 30°-Prismen ersetzt werden. Entscheidend ist, dass sie entlang der dargestellten Pfeillinie verschoben werden können (vorzugsweise gleichzeitig und gleichmässig).

Der Spiegel liefert hier, wie auch bei den anderen Ausführungen, wie schon erwähnt, eine optimale Lichtintensität, da weder Verluste durch Polarisierung, noch Verluste durch die Benützung eines Teilers auftreten. Fig.6 zeigt wie Fig.1 eine CCD Kamera als Bildaufnahmevorrichtung 9. Diese kann aber auch als jede andere Art Videokamera ausgeführt sein.

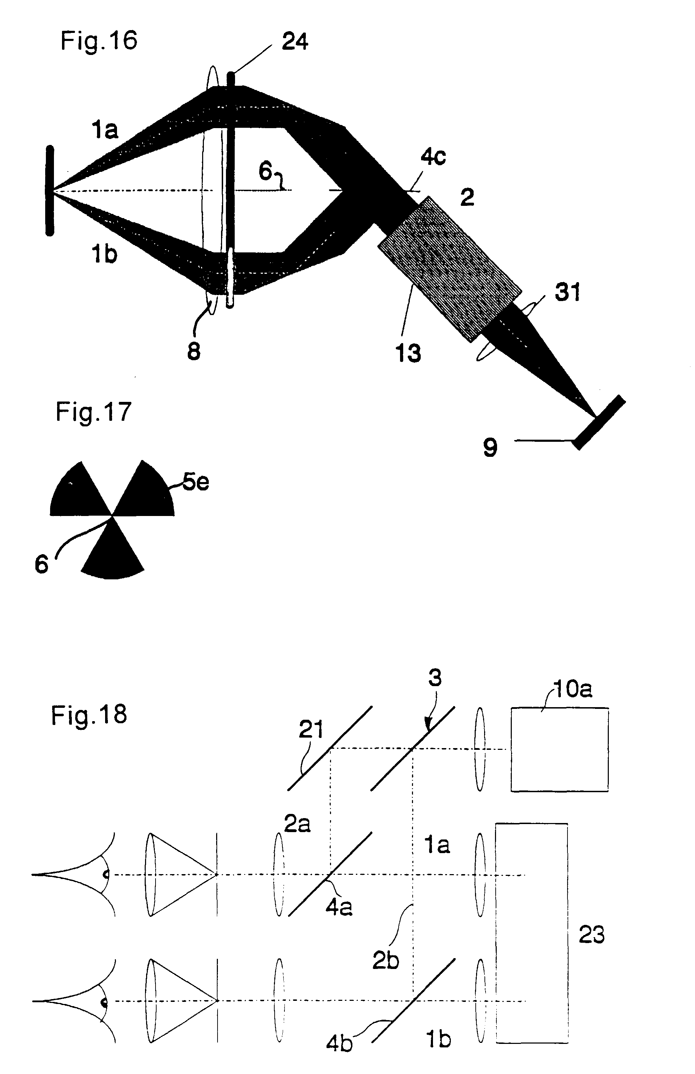

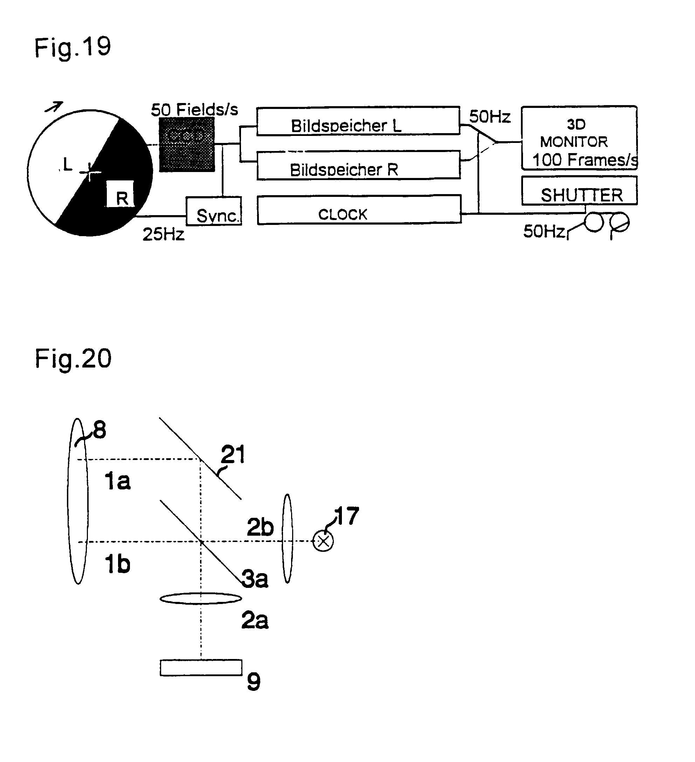

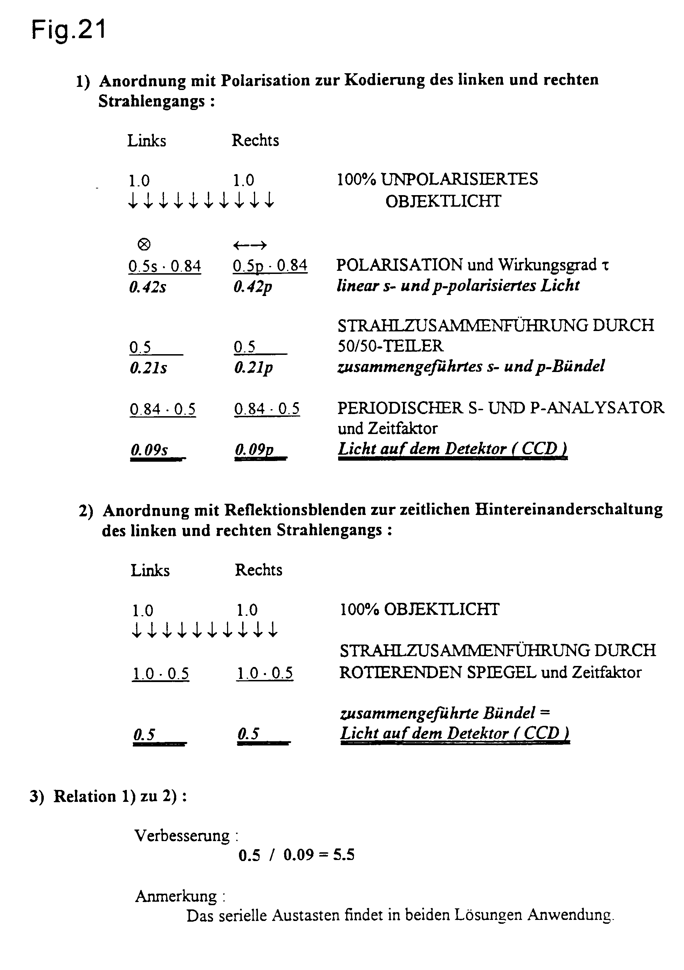

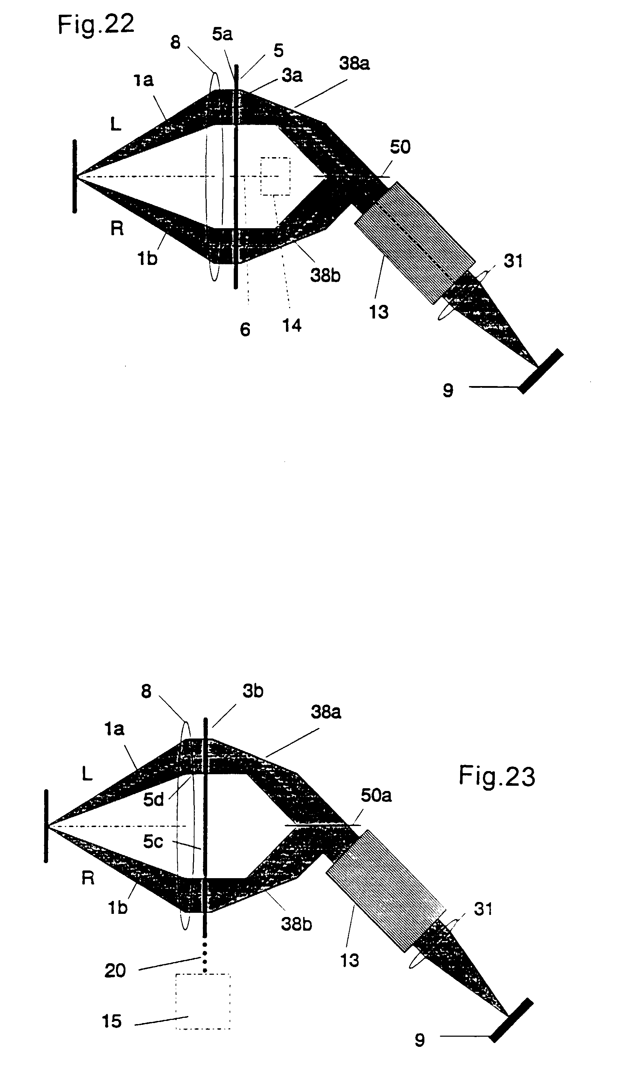

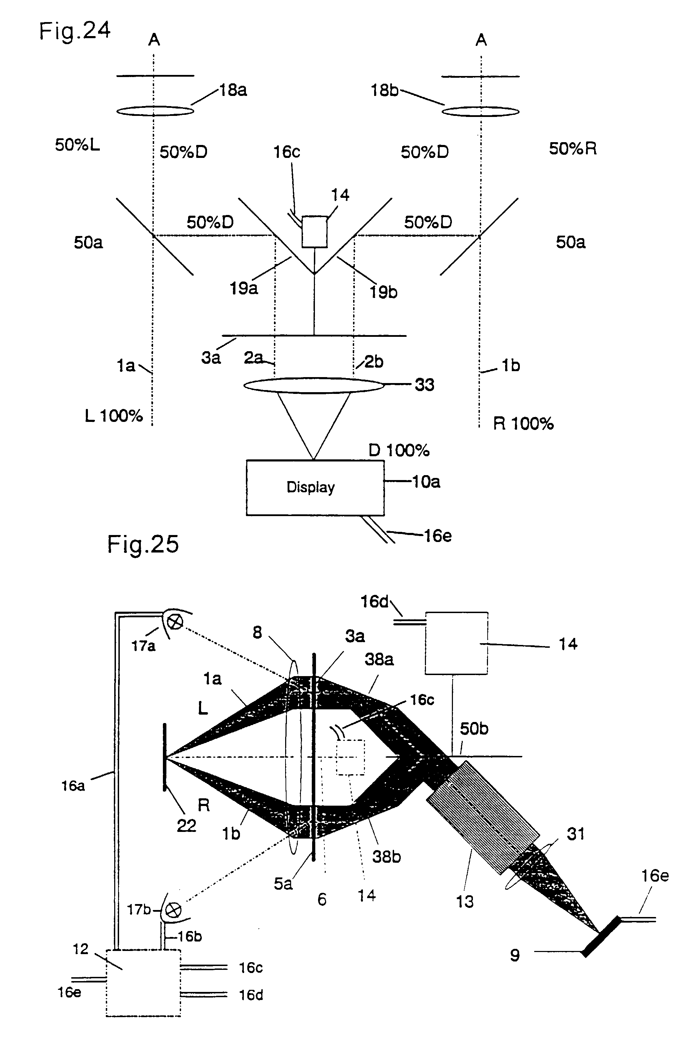

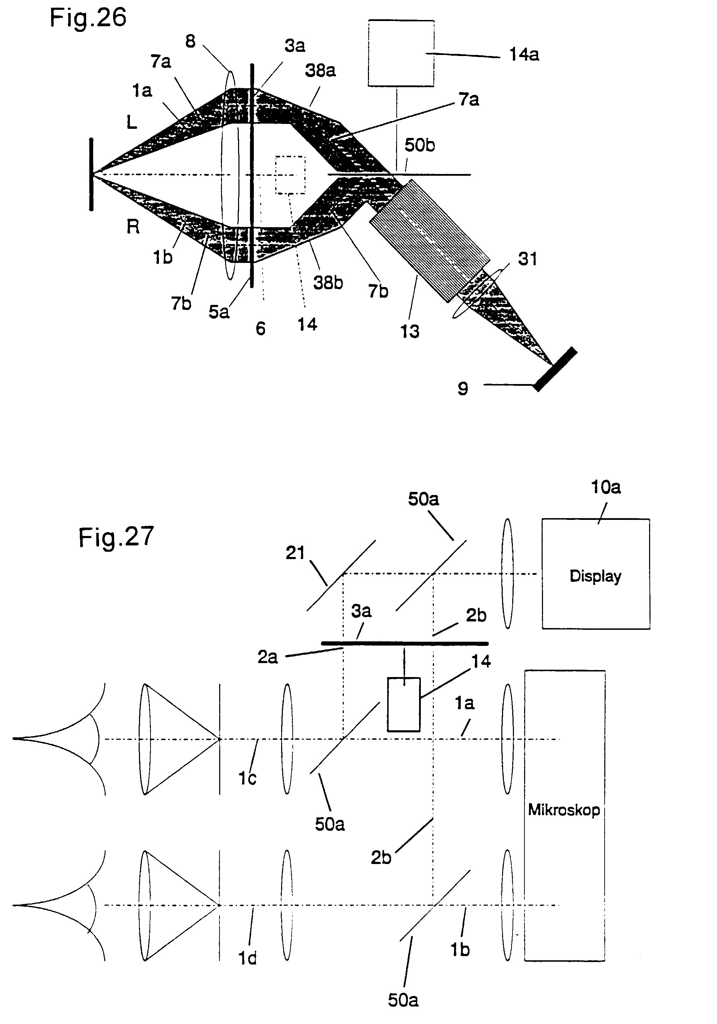

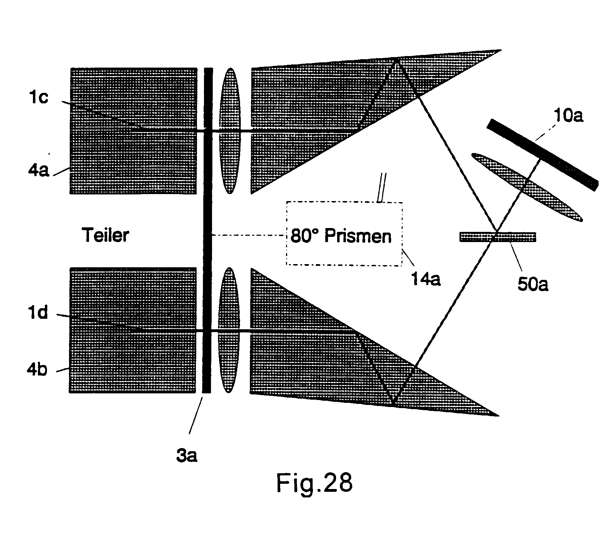

Der Antrieb der Scheibe 5 ist mit dem Auslesen der Bildaufnahmevorrichtung 9 zu synchronisieren. Es ist dabei vorteilhaft, wenn das Auslesen der Bildaufnahmevorrichtung 9 nur einen Teil der Zeit braucht während der Spiegel einen der beiden Eintrittsstrahlenbündel der Vorrichtung zuführt. Aus dieser Vorgabe und der Rotationsgeschwindigkeit der Blende (50 Hz) ist die Taktfrequenz zur Auslesesteuerung der Aufnahmevorrichtung zu berechnen. (Siehe Fig. 17).

Das in Fig.3 gezeigte Schaltelement 3a weist eine gerade Trennlinie zwischen dem reflexiven und transmissiven Teil auf. Diese Trennlinie kann aber weiter optimiert werden. Fig.4 zeigt eine Variante dazu mit 3 reflektiven Kreisausschnittsflächen 5d, die eine Drehzahlreduktion des Schaltelements 3a erlauben.

Die gewonnenen Bilddaten werden entsprechend den angegebenen Patentanmeldungen weiterverarbeitet.

Im Sinne der Erfindung ist es nicht wesentlich, welche der vorbeschriebenen Schaltelemente 3 zur Anwendung gelangen, wenngleich eine rotierende Scheibe bevorzugt ist. Weiters alternativ ist gemäss Fig.2 anstelle eines Schaltelementes auch ein herkömmlicher (z.B. Glas-) Strahlenteiler 4 eingesetzt, wobei dann in den Strahlengängen la und 1b abwechselnd ein aktives Wechselshutterelement 3f als Blende eingeschaltet ist, das entweder den einen oder den anderen Strahlengang 1a oder 1b durchgängig macht. Insofern wird ausdrücklich auf die Fig.22 bis 28 verwiesen, die entsprechende Blenden darstellen.

Andere Varianten weisen in den Strahlengängen je eine Planplatte auf, die verschwenkt werden kann. Durch die Versatzwirkung der schräggestellten Planplatte ergibt sich eine Einstellmöglichkeit der Stereobasis d. Gemäss einer weiteren Variante ist ein Schwenkantrieb vorgesehen, der beide Planplatten synchron bewegt. Dazu sind die Planplatten über ein Gestänge mit dem Antrieb verbunden. Für bestimmte elektronische Auswerteverfahren - z.B. um eine Pixelschrift zu erreichen - ist es sogar denkbar, dass der Schwenkantrieb der Planplatten oszillierend vorgesehen ist.

Fig.7 zeigt einen ersten Strahlengang 1 mit einer optischen Achse 7, der ein Hauptobjektiv 8 und ein Okular 18 beinhaltet. In diesem Strahlengang 1 befindet sich im Winkel von ca. 45° eine um eine Achse 6 drehbare Glasscheibe 5, die eine halbkreisförmige Fläche 5a aufweist, welche dem Objektiv 8 zugewandt verspiegelt ist. Die halbkreisförmige Restfläche 5b ist transparent. Wie symbolisch angedeutet, ist die Scheibe 5 von einem Elektromotor, z.B. einem Steppermotor 14 antreibbar. Befindet sich die Fläche 5a im Strahlengang 1, wird dieser in einen davon abgeteilten zweiten Strahlengang 2 gespiegelt. Befindet sich hingegen die Restfläche 5b im ersten Strahlengang 1, ist dieser gerade durchgehend frei bis zum Okular 18. Die Scheibe 5 wird derart zu einem mechanooptischen Schaltelement bzw. zu einer verspiegelten Blende 3a.

Fig.8 zeigt eine Variante zur Fig.7, bei der anstelle der Scheibe 5 ein oszillierend verschiebbarer Spiegel als Schaltelement 3b zum Einsatz gelangt. Dieses wird von einem Reziprokantrieb 15 angetrieben.

Fig.9 zeigt eine weitere Variante zu Fig.7 mit einem elektronisch schaltbaren Schaltelement (z.B. LCD) 3d, das z.B. aufgrund von Flüssigkristalländerungen von einem transmissiven in einen reflektiven Zustand übergeht. Es wird über Zuleitungen 16 gesteuert.

Fig.10 zeigt eine weitere Variante zu Fig.7 mit einem mechanooptischen Schaltelement 3e, das als mikromechanische Lamellenspiegelkonstruktion ausgebildet ist. Die einzelnen, symbolisch angedeuteten Lamellenspiegel 30 sind, wie durch die Pfeile 34 angedeutet, so schwenkbar, dass sie jeweils etwa parallel zum ersten Strahlengang 1 oder jeweils schräg dazu liegen. Im ersten Fall ist der Strahlengang 1 durchgängig, im zweiten Fall wird er in den zweiten Strahlengang 2 gelenkt. Der äusserste rechte Lamellenspiegel 30 ist in dieser Position dargestellt.

Fig.11 stellt ein weiteres mechanooptisches Schaltelement 3e, eine z.B. mikromechanische Lamellenspiegelkonstruktion zur Einstellung von mindestens zwei Lamellenpositionen dar. Lamellen 30 sind entweder um je eine mittige Achse oder um je eine Längskante der betreffenden Lamelle schwenkbar (vgl. die angedeuteten Pfeile). Durch diese Lamellen 30 ist ein reflektives Schalten zwischen Strahlengang 1 oder 2 möglich.

Fig.12 beschreibt die Kompensation von Phasenunterschieden einzelner Teilwellen 42 an Lamellenspiegeln 30, ausgehend von einer ebenen Welle 41, an einer Phasenplatte 44 mit Ergebnis 43. Diese in Fig.11 und 12 dargestellte Erfindung kann auch unabhängig verwendet werden.

### Bezugszeichenliste

- 1a,b: erster Strahlengang
- 1': verschobener erster Strahlengang
- 2a,b: zweiter Strahlengang (geometrisch übereinander gelegte erste Strahlengänge)
- 2': verschobener zweiter Strahlengang
- 3: mechanooptisches Schaltelement
3a,b,c undurchlässige und vorzugsweise verspiegelte Blende
3d LCD-Shutter-Element
3e mikromechanische Lamellenspiegelkonstruktion
3f LCD-Wechselshutterelement
- 4: Strahlenteiler
4a,b,c Strahlenteiler
- 5: Scheibe
5a halbkeisförmige Fläche -
5b Restfläche der Scheibe 5
5c Kreissegmentflächen
5d
- 6: Achse für Scheibe
- 7: Mittelachse
7a,b Mittelachse
- 8: Hauptobjektiv
- 9: elektronische Bildaufnahmevorrichtung
- 10: Display
10a Display
- 11a,b: Spiegel
- 12a,b,c: Verstelleinrichtung
- 13: Zoom
- 14a,b: Motor
- 15: Reziprokantrieb
- 16: Zuleitung
- 17: Lichtquelle
- 18: Okular
- 19: Umlenkspiegel
- 20: Schubstange
- 21: starrer Spiegel
- 22: Objekt
- 23a,b,a',b';c,d: Planplatte
- 24: Schwenkantrieb
- 25: Gestänge
- 30: Lamellenspiegel von 3e
- 31: Tubuslinse
- 32 33: Vergrösserungsoptik
- 34: Pfeile
- 35: weiterer Spiegel
- 36: Stellantrieb
- 37: Balken
- 38a,b: Umlenkspiegel
- 39: Retroprisma
- 40: Ausgleichsgewicht
- 41: ebene Welle
- 42: Teilwellen
- 43: Ergebnis
- 44: Phasenplatte
- 50a,b: Strahlenteiler
- d: Stereobasis
- p: Phasenstift

Die in dieser Bezugszeichenliste aufgeführten Bezugszeichen beziehen sich auch auf Bauteile der erwähnten und folgenden PCT-Patentanmeldungen WO 95/27918 und WO 95/27917, die zusammen mit den vorliegenden Erfindungen bevorzugt verwendet können.

## Patentansprüche

1. Stereomikroskop, mit einem linken und einem rechten Stereostrahlengang (1a und 1b) durch ein einziges Hauptobjektiv (8), und mit einer Verstelleinrichtung (12) zur Wahl einer Stereobasis (d), wobei das Hauptobjektiv (8) zwischen einem zu betrachtenden Objekt und der Verstelleinrichtung (12) angeordnet ist, **dadurch gekennzeichnet, dass** die beiden Stereostrahlengänge (1a,1b) durch einen Strahlenteiler (3;4) geometrisch ineinander gelegt sind.

2. Stereomikroskop nach Anspruch 1, **dadurch gekennzeichnet, dass** die beiden Stereostrahlengänge (1a,1b) einer gemeinsamen elektronischen Bildaufnahmevorrichtung (9) zugeführt sind.

3. Stereomikroskop nach Anspruch 2, **dadurch gekennzeichnet, dass** der Strahlenteiler (3;4) in die Verstelleinrichtung (12a;b) integriert ist und als mechanooptisches Schaltelement (3a) ausgebildet ist, das alternierend von einem reflektiven in einen transmissiven Zustand überführbar ist, wobei einer der beiden Zustände den Lichtweg für den ersten Strahlengang (la) und der andere Zustand den Lichtweg für einen zweiten Strahlengang (1b) freigibt, während er den Lichtweg für den jeweils anderen Strahlengang (1) sperrt.

4. Stereomikroskop nach Anspruch 3, **dadurch gekennzeichnet, dass** das Schaltelement als verspiegelte Blende (3a;3b;3c) ausgebildet ist, die in den Betrachtungsstrahlengang (1) oszillierend eingebracht, insbesondere eingeschoben wird.

5. Stereomikroskop nach Anspruch 3, **dadurch gekennzeichnet, dass** das Schaltelement (3) ein LCD-Shutter-Element (3d;f) umfasst, das oszillierend zwischen einem sperrenden - und vorzugsweise reflektierenden - und einem transmissiven Zustand - für wenigstens einen der beiden Strahlengänge (1) schaltbar ist.

6. Stereomikroskop nach Anspruch 4, **dadurch gekennzeichnet, dass** die verspiegelte Blende (3a) an einer etwa halbkreisförmigen Fläche (5a) einer Scheibe (5) - insbesondere aus transparentem Material, zum Beispiel Glas - ausgebildet ist, während die Restfläche (5b) der Scheibe (5) transmissiv ist, wobei die Scheibe (5) um eine Achse (6) drehbar ist, die vorzugsweise die Mittelachse (7) des ersten Strahlenganges (1) schneidet.

7. Stereomikroskop nach Anspruch 4, **dadurch gekennzeichnet, dass** die verspiegelte Blende (3a) an einer halbkreisförmigen Scheibe (5c) ausgebildet ist, die um eine Achse (6) drehbar ist, welche vorzugsweise die Mittelachse (7c) des geometrisch übereinander gelegten Strahlenganges (2) schneidet.

8. Stereomikroskop nach Anspruch 6 oder 7, **dadurch gekennzeichnet, dass** mehrere - insbesondere verspiegelte - Blenden (3a) als Kreissegmentflächen (5d) um eine Achse (6) drehbar angeordnet sind.

9. Stereomikroskop nach einem der vorhergehenden Ansprüche, **dadurch gekennzeichnet, dass** die beiden ersten Strahlengänge (1a,1b) durch Lichtlenkelemente, insbesondere Spiegel (11) so gelenkt sind, dass sich ihre Mittelachsen (7a,7b) in einem Winkel - vorzugsweise 90° - schneiden, und dass an der Schnittstelle - insbesondere durch den Schnittpunkt der Achsen (7a,7b) der Strahlenteiler bzw. das Schaltelement(3) eingesetzt ist, wobei in der direkten Verlängerung eines der ersten Strahlengänge (la) die Bildaufnahmevorrichtung (9) - zur Erregung letzterer im transmissiven Zustand des Strahlenteilers bzw. das Schaltelement(3) - angeordnet ist, während der andere der ersten Strahlengänge (1b) über die verspiegelte Fläche im reflektiven Zustand des Strahlenteilers bzw. des Schaltelements(3) als zweiter Strahlengang (2) der Bildaufnahmevorrichtung (9) zugeführt ist.

10. Stereomikroskop nach einem der vorhergehenden Ansprüche, **dadurch gekennzeichnet, dass** das mechanooptische Schaltelement (3a) schrittförmig (z.B. von einem Steppermotor) antreibbar ist und in einem gewählten Schaltzustand kurzzeitig verweilt, und/oder dass im Falle einer nachgeschalteten elektronischen Bildaufnahmevorrichtung (9) eine vorzugsweise elektronische Belichtungssteuerung vorgesehen ist, die ihrerseits die Bildaufnahmevorrichtung (9) mit dem Schaltelement (3) getaktet abwechselnd kurzzeitig aktiviert und deaktiviert.

11. Stereomikroskop nach einem der vorhergehenden Ansprüche, **dadurch gekennzeichnet, dass** die Verstelleinrichtung (12c) wenigstens eine Planplatte (23) umfasst, die in wenigstens einem der Strahlengänge (1) um eine Achse parallel zu ihrer Planfläche schwenkbar angeordnet ist.

12. Stereomikroskop nach Anspruch 11, **dadurch gekennzeichnet, dass** pro Strahlengang (1) je eine Planplatte (23a,b) vorgesehen ist, wobei die beiden Planplatten (23a,b) je um eine Achse schwenkbar sind und von wenigstens einem Schwenkantrieb (24) antreibbar sind, der vorzugsweise elektrisch mit einer Einstellvorrichtung für das Hauptobjektiv (8) und/oder für ein im Strahlengang (1) angeordnetes Zoom (z.B. 13 in Fig. 13) gekoppelt ist.

13. Stereomikroskop nach einem der vorhergehenden Ansprüche, **dadurch gekennzeichnet, dass** das mechanooptische Schaltelement (3) schrittförmig (z.B. von einem Steppermotor) antreibbar ist und in einem gewählten Schaltzustand kurzzeitig verweilt, und/oder dass im Falle einer nachgeschalteten elektronischen Bildaufnahmevorrichtung (9) eine vorzugsweise elektronische Belichtungssteuerung vorgesehen ist, die ihrerseits die Bildaufnahmevorrichtung (9) mit dem Schaltelement (3) getaktet abwechselnd kurzzeitig aktiviert und deaktiviert.

14. Stereomikroskop nach einem der vorhergehenden Ansprüche, **dadurch gekennzeichnet, dass** das Schaltelement (3) aus einer mikromechanischen Lamellenspiegelkonstruktion (3e) aufgebaut ist, deren Lamellenspiegel (30) oszillierend aus- und eingeschwenkt werden können.

15. Stereomikroskop nach Anspruch 4, **dadurch gekennzeichnet, dass** die verspiegelte Blende (3a) an einer halbkreisförmigen Scheibe (5c) ausgebildet ist, die um eine Achse (6) drehbar ist, welche vorzugsweise die Mittelachse (7) des ersten Strahlenganges (1) schneidet.

16. Stereomikroskop nach Anspruch 4, **dadurch gekennzeichnet, dass** mehrere verspiegelte Blenden (3a) als Kreissegmentflächen (5d) um eine Achse (6) drehbar angeordnet sind.

17. Stereomikroskop nach Anspruch 9, **dadurch gekennzeichnet, dass** das Schaltelement so ausgebildet ist, dass seine Verspiegelung beidseitig wirkt, und dass in direkter Verlängerung des anderen der ersten Strahlengänge eine Lichtquelle angeordnet ist, so dass während der Bildinhalt des einen ersten Strahlenganges (1b oder 1a) der Bildaufnahmeeinheit (9) zugeführt wird, über den anderen ersten Strahlengang (1a oder 1b) das Objekt unter dem Hauptobjektiv (8) beleuchtet wird.

18. Stereomikroskop nach einem der vorhergehenden Ansprüche, **dadurch gekennzeichnet, dass** die Länge eines der ersten Strahlengänge (1a) der Längenaddition des anderen ersten Strahlenganges (1b) zuzüglich des zweiten Strahlenganges (2) entspricht.

19. Stereomikroskop mit einem ersten und einem zweiten Strahlengang (1a,1b;2a,2b) und wenigstens einem bzw. je einem Strahlenteiler (50a oder 50b) in diesem Strahlengang (1a,1b;2a,2b), wobei beide Strahlengänge (1a und 1b; 2a und 2b) geometrisch miteinander und/oder mit je einem anderen Strahlengang (1c,1d) überlagerbar sind, und mit je einer Shuttervorrichtung in jedem Strahlengang (1a,1b oder 2a,2b) nach einem der vorhergehenden Ansprüche, **dadurch gekennzeichnet, dass** jede Shuttervorrichtung als wenigstens eine Blende (3) ausgebildet ist, die den betreffenden Strahlengang alternierend lichtdurchgängig macht oder lichtdicht sperrt, wobei gleichzeitig die Blenden (3) so miteinander gekoppelt sind, dass entweder der eine Strahlengang (1a;2a) oder der andere Strahlengang (1b,2b) lichtdurchlässig ist.

20. Stereomikroskop nach Anspruch 19, **dadurch gekennzeichnet, dass** im einen Strahlengang wenigstens zwei Blenden (3 und 50b) vorgesehen sind, die hintereinander angeordnet sind und synchronisiert betrieben werden.

21. Stereomikroskop nach Anspruch 19 oder 20, **dadurch gekennzeichnet, dass** die Blende in den betreffenden Strahlengang (1a,1b;2a,2b) oszillierend einbringbar, insbesondere einschwenkbar oder einschiebbar ist.

22. Stereomikroskop nach einem der vorhergehenden Ansprüche **dadurch gekennzeichnet, dass** die beiden Strahlengänge (1a,1b) gleich lang sind, und dass eine mechanische Blende (3) vorgesehen ist, die entweder den einen oder den anderen Strahlengang (1a oder 1b) sperrt.

## Claims

1. Stereomicroscope with a lefthand and a righthand stereoray path (1a and 1b) through a single main objection (8) and with an adjusting equipment (12) for the selection of a stereobase (d), wherein the main objective (8) is arranged between an object to be looked at and the adjusting equipment (12), characterised in that the two stereoray paths (1a, 1b) are laid geometrically one in the other through a beam splitter (3; 4).

2. Stereomicroscope according to claim 1, characterised in that the two stereoray paths (1a, 1b) are fed to a common electronic image-recording device (9).

3. Stereomicroscope according to claim 2, characterised in that the beam splitter (3; 4) is integrated into the adjusting equipment (12) and constructed as opti-mechanical switching element (3a), which is transferable in alternation between a reflective and a transmissive state, wherein one of the two states frees the light path for the first ray path (1a) and the other one frees the light path for a second light path (1b) whilst it blocks the light path for the respective other ray path (1).

4. Stereomicroscope according to claim 3, characterised in that the switching element is constructed as a light stop (3a; 3b; 3c), which is provided with a reflective coating and is introduced oscillatingly into the observation ray path (1), in particular pushed in.

5. Stereomicroscope according to claim 3, characterised in that the switching element (3) comprises a liquid crystal display shutter element (3d; 3f), which is switchable oscillatingly between a blocking and preferably reflecting state and a transmissive state for at least one of the two ray paths (1).

6. Stereomicroscope according to claim 4, characterised in that the light stop (3a), which is provided with a reflective coating, is formed at an approximately semicircular surface (5a) of a disc, in particular of transparent material, for example glass, whilst the remaining surface (5b) of the disc (5) is transmissive, wherein the disc (5) is rotatable about an axis (6), which preferably intersects the centre axis (7) of the first ray path (1).

7. Stereomicroscope according to claim 4, characterised in that the light stop (3a), which is provided with a reflective coating, is formed at a semicircular disc (5c), which is rotatable about an axis (6), which preferably intersects the centre axis (7c) of the geometrically superposed ray path (2).

8. Stereomicroscope according to claim 6 or 7, characterised in that several light stops (3a), in particular ones provided with a reflective coating, are arranged as circle segment surfaces (5d) to be rotatable about an axis (6).

9. Stereomicroscope according to one of the preceding claims, characterised in that the two first ray paths (1a, 1b) are so deflected by light-deflecting elements, in particular mirrors (11), that their centre lines (7a, 7b) intersect at an angle, preferably of 90°, and that either the beam splitter or the switching element (3) is inserted at the place of intersection, in particular through the point of intersection of the axes (7a, 7b), wherein the image-recording device (9) is arranged in the direct prolongation of one of the first ray paths (1a) for the excitation of the image-recording device (9) in the transmissive state of either the beam splitter or the switching element (3), whilst the other one of the first ray paths (1b) is fed as second ray path (2) to the image-recording device (9) by way of the surface, which is provided with a reflective coating, in the reflective state of either the beam splitter or the switching element (3).

10. Stereomicroscope according to one of the preceding claims, characterised in that the opti-mechanical switching element (3a) is drivable in stepped manner (for example by a stepping motor) and dwells briefly in a chosen switching state and/or, in the case of an electronic image-recording device (9) connected therebehind, a preferably electronic illumination control is provided, which in its turn activates and de-activates the image-recording device (9) briefly in alternation keyed by the switching element (3).

11. Stereomicroscope according to one of the preceding claims, characterised in that the adjusting equipment (12c) comprises at least one planar plate (23), which is arranged in at least one of the ray paths (1) to be pivotable about an axis parallel to their planar surface.

12. Stereomicroscope according to claim 11, characterised in that a respective planar plate (23a, b) is provided for each ray path (1), wherein the two planar plates (23a, b) are each pivotable about a respective axis and are drivable by at least one pivotal drive (24), which is preferably coupled electrically with a setting device for the main objective (8) and/or for a zoom device (for example 13 in Fig. 13) arranged in the ray path (1).

13. Stereomicroscope according to one of the preceding claims, characterised in that the opti-mechanical switching element (3) is drivable in stepped manner (for example by a stepping motor) and dwells briefly in a chosen switching state and/or, in the case of an electronic image-recording device (9) connected therebehind, a preferably electronic illumination control is provided, which in its turn activates and de-activates the image-recording device (9) briefly in alternation keyed by the switching element (3).

14. Stereomicroscope according to one of the preceding claims, characterised in that the switching element (3) is built up from a micromechanical laminar mirror construction (3e), the laminar mirrors (30) of which can be pivoted in and out in oscillatory manner.

15. Stereomicroscope according to claim 4, characterised in that the light stop (3a), which is provided with a reflective coating, is formed at a semicircular disc (5c), which is rotatable about the centre line (7) of the first ray path (1).

16. Stereomicroscope according to claim 4, characterised in that several light stops (3a), which are each provided with a respective reflective coating, are arranged as circle segment surfaces (5d) to be rotatable about an axis (6).

17. Stereomicroscope according to claim 9, characterised in that the switching element is so constructed that its reflective coating acts at both sides and that a light source is arranged in direct prolongation of the other one of the first ray paths so that whilst the image content of the one first ray path (1b or 1a) is fed to the image-recording device (9), the object under the main objective (8) is illuminated by way of the other first ray path (1a or 1b).

18. Stereomicroscope according to one of the preceding claims, characterised in that the length of one of the first ray paths (1a) corresponds with the sum of the lengths of the other one first ray path (1b) and the second ray path (2).

19. Stereomicroscope with a first and a second ray path (1a, 1b; 2a, 2b) and at least one or a respective beam splitter (50a or 50b) in this ray path (1a, 1b; 2a, 2b), wherein the two ray paths (1a and 1b; 2a and 2b) are superposable one geometrically with the other and/or with a respective other ray path, and with a respective shutter device in each ray path (1a, 1b or 2a, 2b), according to one of the preceding claims, characterised in that each shutter device is constructed as at least one light stop (3), which in alternation makes the concerned ray path capable of transmitting light or blocks it to be opaque, wherein the light stops (3) are at the same time so coupled one with the other that either the one ray path (1a; 2a) or the other ray path (1b, 2b) is permeable by light.

20. Stereomicroscope according to claim 19, characterised in that at least two light stops (3 and 50b), which are arranged one behind the other and operated in synchronism, are provided in one ray path.

21. Stereomicroscope according to claim 19 or 20, characterised in that the light stop is introducible into the ray path (1a, 1b; 2a, 2b) concerned in oscillating manner, in particular pivotable inwardly or insertable.

22. Stereomicroscope according to one of the preceding claims, characterised in that the two ray paths (1a, 1b) are equally long and that a mechanical light stop (3) is provided, which blocks either the one or the other ray path (1a or 1b).

## Revendications

1. Stéréomicroscope avec une trajectoire des rayons stéréo gauche et une droite (1a et 1b) à travers le seul objectif principal (8) et avec un système de réglage (12) pour le choix d'une base stéréo (d) où l'objectif principal (8) est agencé entre un objet à observer et le système de réglage (12), caractérisé en ce que les deux trajectoires des rayons stéréo (1a, 1b) sont placées géométriquement l'une dans l'autre par un diviseur de rayons (3 ; 4).

2. Stéréomiscrocope selon la revendication 1, caractérisé en ce que les deux trajectoires des rayons stéréo (1a, 1b) sont conduites à un dispositif électronique commun de prise de l'image (9).

3. Stéréomiscrocope selon la revendication 2, caractérisé en ce que le diviseur de rayons (3 ; 4) est intégré dans le système de réglage (12a ; b) et est configuré comme un élément de commutation (3a) mécano-optique, qui peut être changé de façon alternée d'un état de réflexion à un état de transmission, où l'un des deux états libère le trajet de la lumière pour la première trajectoire des rayons (1a) et l'autre état, le trajet de la lumière pour une seconde trajectoire des rayons (1b) en barrant le trajet de la lumière pour à chaque fois l'autre trajectoire des rayons (1).

4. Stéréomiscrocope selon la revendication 3, caractérisé en ce que l'élément de commutation est configuré comme un obturateur verrouillable qui est introduit oscillant dans la trajectoire des rayons d'observation (1) en particulier y est glissé.

5. Stéréomiscrocope selon la revendication 3, caractérisé en ce que l'élément de commutation (3) comporte un élément obturateur LCD (3d ; f) qui est commutable en oscillant entre un état barrant - et avantageusement réfléchissant - et un état transmissif pour au moins l'une des deux trajectoires des rayons (1).

6. Stéréomiscrocope selon la revendication 4, caractérisé en ce que l'obturateur verrouillable (3a) est formé d'une surface (5a) à peu près en demi-cercle d'un disque (5) - en particulier en un matériau transparent, par exemple du verre -, tandis que le reste de la surface (5b) du disque (5) est transmissif, où le disque (5) est rotatif autour d'un axe (6), qui coupe avantageusement l'axe médian (7) de la première trajectoire des rayons (1) .

7. Stéréomiscrocope selon la revendication 4, caractérisé en ce que l'obturateur verrouillable (3a) est configuré en un disque en demi-cercle (5c) qui est rotatif autour d'un axe (6) qui coupe avantageusement l'axe médian (7c) de la trajectoire des rayons (2) placés géométriquement sur l'autre.

8. Stéréomiscrocope selon la revendication 6 ou 7, caractérisé en ce que plusieurs obturateurs - en particulier réfléchissants (3a) sont agencés en tant que surfaces en segment de cercle (5d) en étant rotatifs autour d'un axe (6).

9. Stéréomiscrocope selon l'une des revendications précédentes, caractérisé en ce que les deux premières trajectoires des rayons (1a, 1b) sont déviées par des éléments déviant la lumière, en particulier des miroirs (11) de façon que leurs axes médians (7a, 7b) se coupent selon un angle - avantageusement de 90° - et en ce que, au point de coupe - en particulier à travers le point de coupe des axes (7a, 7b), soit placé le diviseur de rayons ou respectivement l'élément de commutation (3) et dans le prolongement direct de l'une des premières trajectoires des rayons (1a) est agencé le dispositif de prise de l'image (9) pour l'excitation de ce dernier à un état de transmission du diviseur des rayons ou respectivement de l'élément de commutation (3) -, tandis que l'autre des premières trajectoires des rayons (1b) est conduite par la surface réfléchissante à un état de réflexion du diviseur des rayons ou respectivement de l'élément de commutation (3) en tant que seconde trajectoire des rayons (2) au dispositif de prise de l'image (9).

10. Stéréomicroscope selon l'une des revendications précédentes, caractérisé en ce que l'élément de commutation mécano-optique (3a) peut être entraîné pas à pas (par exemple par un moteur pas à pas) et peut être ralenti un court instant à un état choisi de commutation et/ou en ce que dans le cas d'un dispositif de prise de l'image électronique qui le suit (9), une commande d'éclairement, avantageusement électronique, est prévue qui pour sa part active et désactive un dispositif de prise de l'image (9) en synchronisme avec l'élément de commutation (3) de façon alternée.

11. Stéréomicroscope selon l'une des revendications précédentes, caractérisé en ce que, le système de réglage (12c) comporte au moins une plaque plane (23) qui est agencée pivotante dans au moins l'une des trajectoires des rayons (1) autour d'un axe parallèle à sa surface plane.

12. Stéréomicroscope selon la revendication 11, caractérisé en ce que par trajectoire des rayons (1) est prévue à chaque fois une plaque plane (23a, b) et les deux plaques planes (23a, b) sont pivotantes chacune autour d'un axe et peuvent être entraînées par au moins un entraînement pivotant (24) qui est avantageusement couplé électriquement à un dispositif de réglage pour l'objectif principal (8) et/ou pour un zoom (par exemple 13 sur la figure 13) agencé dans la trajectoire des rayons (1).

13. Stéréomicroscope selon l'une des revendications précédentes, caractérisé en ce que l'élément de commutation mécano-optique (3) peut être entraîné pas à pas (par exemple par un moteur pas à pas) et est ralenti pendant un court instant à un état choisi de commutation et/ou en ce que dans le cas d'un dispositif de prise de l'image électronique qui le suit (9), est prévue une commande d'éclairement, avantageusement électronique, qui pour sa part active et désactive le dispositif de prise de l'image (9) en synchronisme avec l'élément de commutation (3) de façon alternée et pendant un court instant.

14. Stéréomicroscope selon l'une des revendications précédentes, caractérisé en ce que l'élément de commutation (3) est construit à partir d'une construction à miroir à lamelles (3e) micromécanique, dont le miroir à lamelles (30) peut être pivoté vers l'extérieur et vers l'intérieur de manière oscillante.

15. Stéréomicroscope selon la revendication 4, caractérisé en ce que l'obturateur réfléchissant (3a) est configuré sur un disque en demi-cercle (5c) qui est rotatif autour d'un axe (6) qui coupe avantageusement l'axe médian (7) de la première trajectoire des rayons (1) .

16. Stéréomicroscope selon la revendication 4, caractérisé en ce que plusieurs obturateurs réfléchissants (3a) sont agencés en tant que surfaces de segment de cercle (5b) rotatifs autour d'un axe (6).

17. Stéréomicroscope selon la revendication 9, caractérisé en ce que l'élément de commutation est configuré de façon que sa métallisation agisse des deux côtés et en ce que dans le prolongement direct de l'autre des premières trajectoires des rayons soit agencée une source de lumière de façon que pendant que le contenu de l'image de l'une des premières trajectoires des rayons (1b ou 1a) est conduit à l'unité de prise de l'image (9a), l'objet soit éclairé par l'autre première trajectoire des rayons (la ou 1b) sous l'objectif principal (8) .

18. Stéréomicroscope selon l'une des revendications précédentes, caractérisé en ce que la longueur de l'une des premières trajectoires des rayons (la) correspond à l'addition des longueurs de l'autre première trajectoire des rayons (1b) et de la seconde trajectoire des rayons (2).

19. Stéréomicroscope avec une première et une seconde trajectoire des rayons (1a, 1b ; 2a, 2b) et au moins un ou respectivement à chaque fois un diviseur des rayons (50a ou 50b) dans cette trajectoire des rayons (1a, 1b ; 2a, 2b), où les deux trajectoires des rayons (1a et 1b ; 2a et 2b) peuvent être mises en recouvrement géométriquement l'une avec l'autre et/ou avec chaque fois une autre des trajectoires des rayons (1c, 1d) et avec à chaque fois un dispositif obturateur dans chaque trajectoire des rayons (1a, 1b ou 2a, 2b) selon l'une quelconque des revendications précédentes, caractérisé en ce que chaque dispositif obturateur est conféré en tant qu'au moins un obturateur (3) qui alternativement rend transparente à la lumière la trajectoire concernée des rayons ou bien opaque à la lumière et simultanément les obturateurs (3) sont couplés ensemble de façon que soit la première trajectoire des rayons (1a, 2a) ou l'autre trajectoire des rayons (1b, 2b) soit transparente à la lumière.

20. Stéréomicroscope selon la revendication 19, caractérisé en ce que dans une trajectoire des rayons sont prévus au moins deux obturateurs (3 et 50b) qui sont agencés l'un derrière l'autre et fonctionnent en synchronisme.

21. Stéréomicroscope selon la revendication 19 ou 20, caractérisé en ce que les obturateurs peuvent être introduits en oscillant dans la trajectoire correspondante des rayons (1a, 1b ; 2a, 2b), en particulier en y pivotant ou en y glissant.

22. Stéréomicroscope selon l'une des revendications précédentes, caractérisé en ce que les deux trajectoires des rayons (1a et 1b) sont de même longueur et en ce qu'un obturateur mécanique (3) est prévu qui barre soit l'une ou l'autre des trajectoires des rayons (1a ou 1b).
